# FASCICULE DE BREVET EUROPEEN

(11) **EP 1 305 705 B1**
(45) Date de publication et mention de la délivrance du brevet: **28.02.2007**
(21) Numéro de dépôt: 01958174.3
(22) Date de dépôt: 24.07.2001
(51) Int. Cl.: G06F 3/06, G06F 13/10, G06F 11/14

(54) **SYSTEME DE STOCKAGE VIRTUEL**
VIRTUELLES SPEICHERSYSTEM
VIRTUAL STORAGE SYSTEM

(30) Priorité: 04.08.2000 FR 0010353
(43) Date de publication de la demande: 02.05.2003
(73) Titulaire: Neartek Inc., New York, NY 10011 (US)
(72) Inventeur: AZAMBRE, Hubert, F-91951 Villebon Sur Yvette Cedex (FR); DELBOSC, Jean-Marc, F-91951 Villebon Sur Yvette Cedex (FR); BLANCHET, Claude, F-91951 Villebon Sur Yvette Cedex (FR)
(74) Mandataire: Beresford, Keith Denis Lewis
(86) Numéro de dépôt international: PCT/FR2001/002420
(87) Numéro de publication internationale: WO 2002/012993

(56) Documents cités:
- WO-A-98/44423
- US-A- 5 809 511

## Description

La présente invention concerne le domaine du stockage de données informatiques sur des supports tels que des cassettes de grande capacité, par un équipement distant comprenant généralement un robot de manipulation de cassettes.

A titre d'exemple le brevet PCT W09844423 décrit un réseau informatique comprenant un certain nombre d'unités de commande de stockage, chacune étant couplée à une pluralité d'ensembles de stockage, lesquels ensembles comprennent au moins un dispositif à mémoire de grande capacité (MSD). Chaque unité de commande de stockage peut être couplée à au moins un système de traitement hôte et à au moins une autre unité de commande de stockage de façon à commander l'accès des systèmes de traitement hôte aux dispositifs à mémoire de grande capacité. Plusieurs copies de données sont stockées dans des ensembles de stockage géographiquement distants les uns des autres, de sorte que n'importe quel hôte peut accéder à n'importe quelle copie. Chaque unité de commande de stockage comprend une interface avec un hôte qui émule un dispositif à mémoire de grande capacité indépendant du type de dispositif de stockage et une interface avec un ensemble local de stockage qui émule un hôte indépendant du type de l'hôte. Des hôtes accèdent aux données stockées au moyen d'un adressage virtuel. Les unités de commande de stockage assurent des sauvegardes et des corrections d'erreur automatiques ainsi qu'une protection en écriture des copies de sauvegarde.

On connaît également le brevet américain US5,809,511 décrit un système de transfert de données entre un poste hôte et un équipement complémentaire comprenant une mémoire cache et un équipement robotisé de gestion de supports d'enregistrement.

Le but de l'invention est de proposer un système de sauvegarde amélioré permettant l'utilisation par un parc hétérogène d'ordinateurs hôtes, reliés à un équipement de sauvegarde commun non spécifique. A cet effet, l'invention concerne selon son acception la plus générale un système pour la sauvegarde de données conforme à la revendication 1.

Avantageusement, l'émulateur est constitué par un calculateur pour procéder à l'analyse des signaux provenant de l'ordinateur hôte et pour la génération d'une réponse correspondant au type de lecteur-enregistreur de cassette simulé.

L'invention concerne également un procédé pour la sauvegarde de données provenant d'un ordinateur hôte [mainframe] caractérisé en ce que l'on émule l'interface d'entrée sortie d'un équipement de sauvegarde afin qu'un équipement de sauvegarde présente, pour une machine hôte, un comportement identique à un lecteur-enregistreur de sauvegarde (dérouleur de bandes), ledit équipement de sauvegarde comportant un moyen de stockage intermédiaire différent d'un dérouleur de bande.

La présente invention sera mieux comprise à la lecture de la description d'un exemple non limitatif de réalisation qui suit, ce référant aux dessins annexés où :

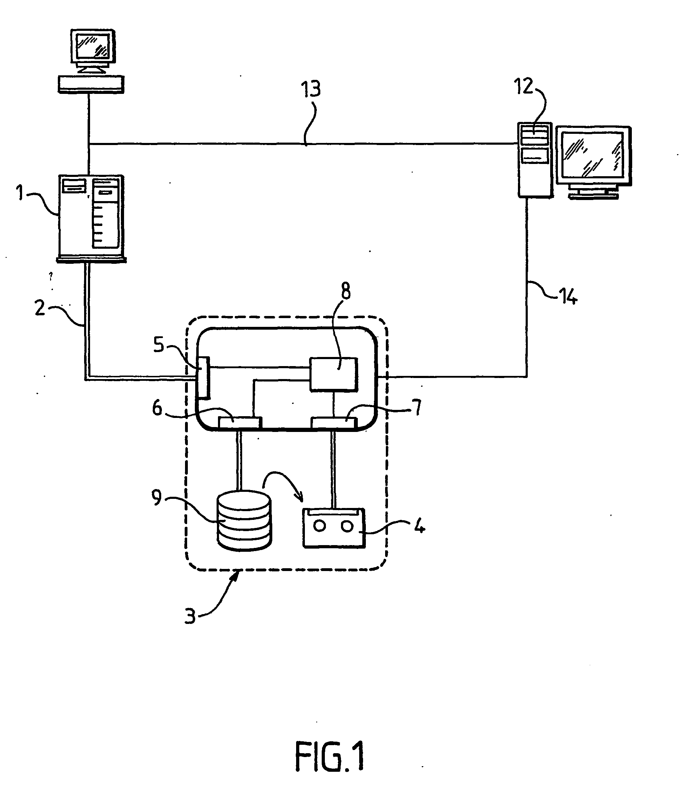

- la figure 1 représente le schéma de principe de l'invention.

Le système décrit dans ce qui suit permet la sauvegarde de données provenant d'un parc hétérogène de machines hôtes (1) de type «Mainframe» connectées à un réseau informatique (2) de type SCSI.

L'équipement de sauvegarde (3) comporte un ou plusieurs dérouleurs de bande (4) ou « streamer » pour la sauvegarde des données sur support magnétique.

Il est connecté au réseau par le biais d'un circuit interface (5) d'entrée-sortie émulé de façon à ce que l'équipement de sauvegarde (3) soit vu par la machine hôte sous la forme d'un dérouleur de sauvegarde du type émulé, et ce pour l'ensemble des fonctions remplies par l'équipement de sauvegarde (3). L'interface émulée assure une émulation des principaux dérouleurs de bandes connus afin de permettre un dialogue transparent entre la machine hôte et l'équipement de sauvegarde (3).

L'équipement de sauvegarde (3) comporte par ailleurs au moins un dispositif de stockage intermédiaire (9) composé dans l'exemple décrit par des disques durs RAID.

L'équipement de sauvegarde comporte pour chacun des supports de sauvegarde des initiateurs (6, 7). Un calculateur commande les différentes ressources pour assurer le transfert des données depuis l'interface d'entrée sortie (5) vers le dispositif de stockage intermédiaire (9) et inversement, ainsi que le transfert des données depuis le dispositif de stockage intermédiaire (9) vers les dérouleurs de bande (4) et inversement.

Vu depuis la machine hôte, l'équipement de sauvegarde selon l'invention répond aux spécifications suivantes :
- Il présente un comportement identique au lecteur-enregistreur de sauvegarde auquel il se substitue ;
- Il améliore la vitesse de stockage des données par l'intermédiaire d'un cache disque. Afin d'accélérer la sauvegarde et la restauration des données, celles-ci sont stockées sur une partition du disque. L'accès aux données est amélioré grâce à un métamodèle des données sauvegardées qui mémorise la cartographie des données. Ce métamodèle permet un accès direct aux données stockées séquentiellement.
- Il recopie les données sur un dérouleur. Les données sauvegardées sur la partition disque sont recopiées sur bande, en reproduisant le mécanisme d'écriture initial, par l'exploitation du modèle.
- Il assure la persistance et la cohérence des données. En fin de sauvegarde, l'équipement de sauvegarde est le garant de la persistance et de la cohérence des données sur bande et partition. De plus, il permet de décorréler le type de dérouleur amont (celui que l'on émule), de l'aval (celui que l'on pilote réellement). En amont, l'équipement de sauvegarde gère un dérouleur d'un modèle et sauvegarde les données sur un dérouleur d'un autre modèle.

L'équipement de sauvegarde (3) assure les types de connexions suivantes :
- en amont : SCSI, FC, ESCON, Bus&Tag
- en aval : SCSI, PC.

L'équipement de sauvegarde gère plusieurs connexions en amont et en aval simultanément. En conséquence, il exécute plusieurs transferts en parallèle. Chaque transfert est géré par une unité de transfert.

Une unité de transfert gère trois types de liens :
- liaison avec un système hôte
- liaison avec une partition d'un disque physique
- liaison avec le dérouleur de bande.

Le système comporte en outre un poste superviseur (12) connecté par des liaisons série (13, 14) d'une part à la machine hôte et d'autre part à l'équipement de sauvegarde.

L'émulation consiste à simuler le fonctionnement SCSI d'un dérouleur de bande vis-à-vis d'une machine hôte et à gérer les réponses SCSI aux différentes demandes de l'hôte et les transferts d'enregistrement.

Le poste de supervision (12) commande une base de données dans laquelle sont enregistrées les étiquettes d'identification des données sauvegardées.

Les volumes de données écrits par les machines hôtes sont dans un premier temps créés dans un espace disque tampon (9). Ces volumes ont une taille maximale fixée au moment de la configuration du système de sauvegarde, généralement assez faible, de l'ordre de 250 Mo. Les volumes sont dans un deuxième temps transférés vers des cartouches, en un ou plusieurs exemplaires. Seules les données réellement significatives sont transférées sur bande. Ainsi, un volume de taille maximale 250 Mo peut par exemple ne contenir que 10 Mo de données. Dans ce cas, seuls ces 10 Mo sont transférés sur bande, de façon à optimiser l'espace bande.

L'équipement de sauvegarde gère en interne, grâce à une base de données, la liste des volumes connus, en stockant un certain nombre d'informations, telles que :
- le nom du volume
- le support sur lequel il est stocké (disque, cartouche)
- la position sur le support (numéro de partition disque, ou adresses logiques de début et de fin sur cartouche)
- etc.

Ces informations sont essentielles pour pouvoir retrouver un volume.

Au moment du transfert des données du cache disque vers des cartouches, on ajoute en fin de transfert de chaque volume des informations privées, appelées « Informations de base ». Ces informations sont uniquement écrites sur cartouches, et sont ignorées dans les transferts en sens inverse, dans le cas où un volume est transféré depuis une cartouche vers le cache disque, par exemple en vue d'une restauration par la machine hôte. Elles sont donc entièrement gérées en interne et transparentes pour les machines hôtes.

Les informations de base pour un volume donné sont écrites sous la forme d'une chaîne de caractères ASCII ayant la structure suivante :
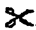 *titre* CR LF *position Début Volume position Fin Volume taille Volume voieLecteur 1 vote Disque partition Disque numéro Processeur \ codeBarre nomCarlouche 1 typeCartouche tailleUtilisée tailleCartouche \ cpichargement nomVolume étatVolume codeHost typeCodage \ dateEcriture heureEcriture dateLecture heureLecture \ dateVidage heureVidage* CR LF 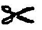
titre : titre indiquant sous forme abrégée la signification des principaux champs suivants.
CR : caractère ASCII de code 0x13 (hexadécimal).
LF : caractère ASCII de code 0x10 (hexadécimal).
- *positionDébutVolume* : adresse logique sur la cartouche du début du volume.
- *positionFinVolume* : adresse logique sur la cartouche de la fin du volume.
- *tailleVolume* : taille approximative du volume en Ko.
- *voieLecteur* : numéro du lecteur (défini dans la configuration HBS) utilisé pour réaliser le transfert du volume du cache disque vers la cartouche.
- *voieDisque* : numéro du disque (défini dans la configuration HBS) dans lequel se trouvait le volume au moment de son transfert vers la cartouche.
- *partitionDisque* : numéro de la partition disque dans laquelle se trouvait le volume avant son transfert sur la cartouche.
- *numéroProcesseur :* numéro du processeur utilisé pour transférer le volume du cache disque vers la cartouche.
- *codeBarre* : code barre de la cartouche contenant le volume.
- *nomCartouche* : nom de la cartouche, tel qu'il est déclaré sous HBS. Ce nom est indépendant du code barre.
- *typeCartouche* : code hexadécimal indiquant le type de la cartouche. Les valeurs possibles sont les suivantes :.
   - 0x00000001L cartouche d'exploitation
   - 0x00000010L cartouche avec accès en lecture autorisé
   - 0x00000020L cartouche avec accès en écriture autorisé
   - 0x00000080L cartouche en cours de réorganisation
   - 0x00000100L cartouche à réorganiser
   - 0x00000200L cartouche à ne pas réutiliser
   - 0x00000400L cartouche bloquée vide
   - 0x00000800L cartouche réorganisée
   - 0x00001000L cartouche de type archive
   - 0x00002000L cartouche de type miroir
   - 0x00010000L cartouche pour lecteur DLT
   - 0x00020000L cartouche pour lecteur Exabyte
   - 0x00040000L cartouche pour lecteur 3480
   - 0x00080000L cartouche pour lecteur 3590
   - 0x01F00000L masque pour numéro du pool archive ou miroir auquel appartient la cartouche

Le code utilisé pour le champ *typeCartouche* peut éventuellement être une combinaison des valeurs précédentes.
- *tailleUtillsée* : taille totale des données stockées sur la cartouche, en Méga Octets.
- *tailleCartouche* : capacité maximale de la cartouche, en Méga Octets.
- *cptChargement* : compteur de chargement de la cartouche. Indique le nombre de fois que la cartouche a été chargée dans un lecteur. Cette information sert à déterminer l'usure de la cartouche.
- *nomVolume* : nom du volume, tel qu'il est connu de la machine hôte.
- *étatVolume* : code hexadécimal indiquant l'état du volume. Ce code est une combinaison des indicateurs dont les masques d'accès et les valeurs possibles sont les suivants :

- 0x00000001L 1 si le volume est valide, 0 si invalide (ancienne version ou volume logiquement effacé)
- 0x00000008L 1 si le volume est de type miroir
- 0x00000010L 1 si le volume a une copie miroir sur une autre cartouche
- 0x00000020L 1 si une copie de ce volume doit être faite sur une cartouche miroir
- 0x00001000L 1 si le volume est de type archive
- 0x00002000L 1 si le volume est partagé entre plusieurs systèmes hôtes
- 0x00010000L 1 si le volume doit toujours être copiés sur des cartouches DLT
- 0x00020000L 1 si le volume doit toujours être copiés sur des cartouches Exabyte
- 0x00040000L 1 si le volume doit toujours être copiés sur des cartouches 3480
- 0x00080000L 1 si le volume doit toujours être copiés sur des cartouches 3590
- 0x01F00000L numéro du pool archive ou miroir (de 0 à 31)
- *codeHost* : numéro de la machine hôte de la configuration HBS à laquelle appartient le volume.
- *typeCodagre* : code de caractères utilisé dans l'entête du volume (0 = ASCII, 1 = EBCDIC).
- *dateEcriture* : date de dernière écriture ou modification du volume par la machine hôte, sous la forme aaaa-mm-jj
- *heureEcriture* : heure de dernière écriture ou modification du volume par la machine hôte, sous la forme hh:mm:ss
- *dateLecture* : date de dernier accès en lecture du volume par la machine hôte, sous la forme aaaa-mm-jj
- *heureLecture* : heure de dernier accès en lecture du volume par la machine hôte, sous la forme hh:mm:ss
- *dateVidage :* date du transfert du volume du cache disque vers la cartouche, sous la forme jj-mm-aaaa
- *heureVidage* : heure du transfert du volume du cache disque vers la cartouche, sous la forme hh:mm:ssLes informations de base sont cumulatives, pour accélérer l'analyse des cartouches en vue d'une reconstruction de la base de données.

Supposons qu'une bande contient les volumes V1, V2, V3, V4 et V5. Les informations de base associées à chacun de ces volumes sont appelées B1, B2, B3, B4 et B5. on a donc sur la bande :Les informations de base B1 ne contiennent que des informations concernant le volume V1. Les informations de base B2 contiennent dans un seul enregistrement de données un cumul de B1 et des

| | | | | | | | | | | |
|---|---|---|---|---|---|---|---|---|---|---|
| V1 | B1 | V2 | B2 | V3 | B3 | V4 | B4 | V5 | B5 | |

informations concernant le volume V2. B2 contient donc les informations de V1 et V2.

Les informations de base B3 contiennent dans un seul enregistrement de données un cumul de B2 et des informations concernant le volume V3. B3 contient donc les informations de V1, V2 et V3.

Les dernières informations de base de la cartouche, B5 dans l'exemple précédent, contiennent donc un cumul de toutes les informations concernant tous les volumes présents sur la cartouche.

Dans le cas où une cartouche contient de très nombreux volumes, les informations de base cumulées peuvent atteindre une taille importante. Pour limiter cet accroissement, une taille maximale a été arbitrairement fixée à. 132 Ko. Lorsque la construction standard des informations de base d'un volume dépasse 132 Ko, l'équipement (3) affecte à ce volume des informations de base réduites, contenant uniquement les informations de base de ce nouveau volume, sans cumul des informations des volumes précédents. Pour les volumes suivants, le mécanisme standard de cumul des informations du volume courant avec celles du volume précédent est repris.

En cas de perte totale de la base de données du système, la reconstruction complète de la base peut être effectuée grâce à ces informations de base. Une fonctionnalité intégrée au code des processeurs permet d'analyser une cartouche pour en extraire les dernières informations de base. Cette analyse peut également être effectuée par un logiciel externe : il suffit de se positionner en fin de bande, de reculer d'un enregistrement et de lire le dernier enregistrement de données. Les informations de base ainsi récupérées en fin de cartouche contiennent une description des volumes de la cartouche. Comme décrit au paragraphe précédent, si le champ *adresseVolume* du premier volume contient une valeur différente de 0, ceci signifie que le premier volume n'est pas au début de la bande. On doit en déduire qu'il s'agit d'informations de base réduites, Il suffit alors de se positionner sur la cartouche à l'adresse *adresseVolume,* puis de reculer de 1 enregistrement pour pouvoir lire les informations de base du volume précédent. Celles-ci sont elles-mêmes un cumul des informations de base des volumes précédents.

On doit poursuivre l'analyse arrière de la cartouche jusqu'à trouver des informations de base avec un champ *adresseVolume* à 0 pour le premier volume. L'ensemble des volumes de la cartouche peut alors être connu en cumulant toutes les informations de base récupérées.

La reconstruction de la base nécessite la récupération de toutes les informations de base stockées sur toutes les cartouches de la librairie, puis leur analyse, par un logiciel approprié. L'ensemble de ces informations comprend toutes celles nécessaires pour reconstruire la base. Pour ce faire, il convient non seulement de dresser la liste de tous les volumes contenus sur toutes les cartouches, mais aussi de déterminer pour chaque volume d'une cartouche s'il est valide pour la machine hôte ou non. En effet, un même volume (même nom, même système hôte) peut être présent sur plusieurs cartouches différentes, ou à plusieurs endroits sur une même cartouche. Ceci peut se produire pour les raisons suivantes :
- soit il s'agit de plusieurs versions différentes d'un même volume qui a été mis à jour plusieurs fois par la machine hôte
- soit il s'agit des mêmes données qui ont été déplacées par HBS en interne.Dans tous les cas, l'analyse des informations de base *dateEcriture* et *heureEcriture* de toutes les occurrences de ce volume permet de déterminer laquelle est la plus récente, et donc la seule valide. Si la version la plus récente est présente à plusieurs endroits (mêmes informations *dateEcriture* et *heureEcriture*), n'importe laquelle de ces occurrences peut être utilisée pour devenir la version valide du volume dans la nouvelle base. Il suffit ensuite de recréer une base de données vide, et de remplir toutes les tables avec les informations collectées.

## Revendications

1. Système de stockage virtuel pour le transfert de données de sauvegarde entre des ordinateurs hôtes hétérogènes (1) et un système commun (3) de sauvegarde, le système de stockage virtuel comportant :
un réseau (2) ayant au moins deux ordinateurs hôtes hétérogènes (1), un système commun de sauvegarde (3) et une unité à superviseur (12) qui est connectée auxdits, au moins deux, ordinateurs hôtes hétérogènes (1) et audit système commun (3) de sauvegarde,
dans lequel ledit système commun de sauvegarde comporte : au moins un dérouleur de bande (4) ; au moins un dispositif de stockage intermédiaire (9) ; un premier initiateur (7) pour ledit, au moins un, dérouleur de bande (4) ; un second initiateur (6) pour ledit, au moins un, dispositif de stockage intermédiaire (9) ; une interface d'entrée/sortie (5) comportant un émulateur ; et une unité de calcul pour commander un transfert de données entre ladite interface d'entrée/sortie (5), ledit au moins un dispositif de stockage intermédiaire (9) et ledit au moins un dérouleur de bande (4),
dans lequel, pour chacun desdits au moins deux ordinateurs hôtes hétérogènes (1), ledit émulateur peut être mis en oeuvre afin d'émuler un système de sauvegarde qui est compatible avec cet ordinateur hôte (1), afin de permettre un dialogue transparent entre les au moins deux ordinateurs hôtes hétérogènes (1) et le système commun de sauvegarde (3), et
dans lequel l'unité à superviseur (12) comporte une base de données pour le stockage d'informations prédéterminées concernant lesdites données de sauvegarde.

2. Système de stockage virtuel selon la revendication 1, dans lequel le réseau (2) comprend un réseau SCSI.

3. Système selon la revendication 1 ou 2, dans lequel au moins l'un desdits au moins deux ordinateurs hôtes hétérogènes (1) comprend un mainframe.

4. Système selon l'une quelconque des revendications précédentes, dans lequel ledit émulateur peut être mis en oeuvre pour émuler plusieurs dérouleurs de bande différents (4) compatibles avec lesdits au moins deux ordinateurs hôtes hétérogènes (1).

5. Système selon l'une quelconque des revendications précédentes, dans lequel ledit au moins un dispositif de stockage intermédiaire (9) comprend un disque dur de type RAID.

6. Système selon la revendication 2, dans lequel ledit émulateur peut être mis en oeuvre pour gérer une requête provenant de l'un desdits ordinateurs hôtes hétérogènes (1) pour la sauvegarde de données, et pour simuler une opération SCSI d'un dérouleur de bande qui est compatible avec cet ordinateur hôte (1).

## Claims

1. Virtual storage system for transfer of backup data between host computers (1) of different types and a common backup system (3), the virtual storage system including:
a network (2) with at least two host computers (1) of different types, a common backup system (3) and a supervisor unit (12) which is connected to said at least two host computers (1) of different types and to said common backup system (3),
wherein said common backup system includes: at least one tape drive (4); at least one intermediate storage device (9); a first initiator (7) for said at least one tape drive (4); a second initiator (8) for said at least one intermediate storage device (9); an input/output interface (5) including an emulator; and a calculation unit to control a transfer of data between said input/output interface (5), said at least one intermediate storage device (9) and said at least one tape drive (4),
wherein, for each of said at least two host computers (1) of different types, said emulator can be implemented to emulate a backup system which is compatible with this host computer (1), to make possible a transparent dialogue between the at least two host computers (1) of different types and the common backup system (3), and
wherein the supervisor unit (12) includes a database for storing predetermined information concerning said backup data.

2. Virtual storage system according to claim 1, wherein the network (2) comprises an SCSI network.

3. System according to either claim 1 or claim 2, wherein at least one of said at least two host computers (1) of different types comprises a mainframe.

4. System according to any one of the preceding claims, wherein said emulator can be implemented to emulate a plurality of different tape drives (4), which are compatible with said at least two host computers (1) of different types.

5. System according to any one of the preceding claims, wherein said at least one intermediate storage device (9) comprises a RAID type hard disk.

6. System according to claim 2, wherein said emulator can be implemented to manage a request from one of said host computers (1) of different types to back up data, and to simulate an SCSI operation of a tape drive which is compatible with this host computer (1).

## Patentansprüche

1. Virtuelles Speichersystem für die Übertragung von Sicherungsdaten zwischen heterogenen Wirtsrechnern (1) und einem gemeinsamen Sicherungssystem (3), wobei das virtuelle Speichersystem umfasst:
ein Netz (2), das mindestens zwei heterogene Wirtsrechner (1), ein gemeinsames Sicherungssystem (3) und eine Supervisoreinheit (12) besitzt, die mit den mindestens zwei hetereogenen Wirtsrechnern (1) und dem gemeinsamen Sicherungssystem (3) verbunden ist,
in dem dieses gemeinsame Sicherungssystem umfasst: mindestens einen Bandabroller (4); mindestens eine Zwischenspeichervorrichtung (9); einen ersten Initiator (7) für den mindestens einen Bandabroller (4); einen zweiten Initiator (6) für die mindestens eine Zwischenspeichervorrichtung (9); eine einen Emulator umfassende Eingangs/Ausgangs-Schnittstelle (5); und eine Recheneinheit zum Steuern einer Datenübertragung zwischen der Eingangs/Ausgangs-Schnittstelle (5), der mindestens einen Zwischenspeichervorrichtung (9) und dem mindestens einen Bandabroller (4),
in dem für jeden der mindestens zwei heterogenen Wirtsrechner (1) der Emulator eingesetzt werden kann, um ein Sicherungssystem zu emulieren, das mit diesem Wirtsrechner (1) kompatibel ist, um einen transparenten Dialog zwischen den mindestens zwei heterogenen Wirtsrechnern (1) und dem gemeinsamen Sicherungssystem (3) zu gestatten, und
in dem die Supervisoreinheit (12) eine Datenbasis für die Speicherung von vorbestimmten, diese Sicherungsdaten betreffenden Informationen umfasst.

2. Virtuelles Speichersystem nach Anspruch 1, bei dem das Netz (2) ein SCSI-Netz umfasst.

3. System nach Anspruch 1 oder 2, bei dem mindestens einer der mindestens zwei heterogenen Wirtsrechner (1) ein Mainframe umfasst.

4. System nach einem der vorhergehenden Ansprüche, bei dem der Emulator eingesetzt werden kann, um mehrere verschiedene Bandabroller (4) zu emulieren, die mit den mindestens zwei heterogenen Wirtsrechnern (1) kompatibel sind.

5. System nach einem der vorhergehenden Ansprüche, bei dem die mindestens eine Zwischenspeichervorrichtung (9) eine Festplatte vom Typ RAID umfasst.

6. System nach Anspruch 2, bei dem der Emulator verwendet werden kann, um eine von einem der heterogenen Wirtsrechner (1) kommende Anfrage zur Datensicherung zu verwalten und um eine SCSI-Operation eines Bandabrollers zu simulieren, der mit diesem Wirtsrechner (1) kompatibel ist.
